Europäisches Patentamt

European Patent Office

Office européen des brevets

(19)

(11) Numéro de publication: **0 297 986**

**A2**

(12) # DEMANDE DE BREVET EUROPEEN

(21) Numéro de dépôt: **88401682.5**

(22) Date de dépôt: **30.06.88**

(51) Int. Cl.⁴: **C 03 B 23/035**
**C 03 B 35/20**

(30) Priorité: **02.07.87 DE 3721863**

(43) Date de publication de la demande:
**04.01.89 Bulletin 89/01**

(84) Etats contractants désignés:
**BE CH DE ES FR GB IT LI LU NL SE**

(71) Demandeur: **SAINT-GOBAIN VITRAGE**
**Les Miroirs 18, avenue d'Alsace**
**F-92400 Courbevoie (FR)**

(84) Etats contractants désignés:
**BE CH ES FR GB IT LI LU NL SE**

(71) Demandeur: **VEGLA Vereinigte Glaswerke GmbH**
**Viktoriaallee 3-5**
**D-5100 Aachen (DE)**

(84) Etats contractants désignés: **DE**

(72) Inventeur: **Kuster, Hans-Werner**
**Schervierstrasse 11**
**D-5100 Aachen (DE)**

**Radermacher, Herbert**
**Belven 118**
**B-4730 Raeren (BE)**

**Vanaschen, Luc**
**Binsterveg 113**
**B-4700 Eupen (BE)**

(74) Mandataire: **Leconte, Jean-Gérard et al**
**SAINT-GOBAIN RECHERCHE 39, Quai Lucien Lefranc**
**F-93300 Aubervilliers (FR)**

(54) **Dispositif de soutien d'une feuille de verre et application de ce dispositif à un procédé de bombage de feuilles de verre.**

(57) L'invention concerne un procédé de formage d'une feuille de verre selon lequel la feuille est soulevée au dessus du plan de transport au moyen d'un dispositif de soutien d'une feuille de verre constitué par un caisson ouvert par le bas dont l'ouverture du dessous correspond à la forme de la feuille de verre à saisir et est légèrement plus petite que celle-ci de manière à ce qu'il se forme sur les bords de la feuille de verre une étroite surface de contact annulaire et à ce que la dépression régnant dans le caisson soit limitée à une valeur telle que le poids de la feuille de verre soit essentiellement compensé, puis est appliquée contre une forme de bombage par un courant de gaz chaud dirigé de bas en haut.
L'invention s'applique à la production de vitrages en forme.

Fig. 3

EP 0 297 986 A2

## Description

## PROCEDE DE BOMBAGE D'UNE FEUILLE DE VERRE ET DISPOSITIF DE SOUTIEN ADAPTE A CE PROCEDE

L'invention concerne un procédé de bombage de feuilles de verre ainsi qu'un dispositif de soutien d'une feuille de verre échauffée à la température de formage en position horizontale, ledit dispositif étant constitué par une enceinte dans laquelle peut être établie une dépression et par une surface de contact munie d'orifices de succion dirigés vers le bas et contre laquelle la feuille de verre est maintenue par effet d'aspiration.

Il est connu différents procédés de fabrication de feuilles de verre bombées, en particulier de vitrages automobiles, qui utilisent un dispositif de soutien constitué par une enceinte dans laquelle est établie une dépression et par une surface de contact munie d'orifices de succion dirigés vers le bas. Le dispositif de soutien sert à soulever au-dessus de la bande transporteuse horizontale les feuilles de verre échauffées à la température de bombage dans un four traversant et de les déposer sur un outil de bombage ou sur un autre dispositif de transport. Différents modes de réalisation de tels dispositifs de soutien ont été par exemple proposés dans les publications de brevet DE-2 000 271, EP-3391, EP-3392 et EP-182 638. Dans tous les modes de réalisation connus, la surface de contact - contre laquelle la feuille de verre est maintenue par effet d'aspiration - est une plaque, de surface plane ou légèrement bombée, munie de canaux ou d'alésages verticaux partant de la surface de contact et aboutissant à une enceinte sous dépression réglable. En règle générale, la dépression est obtenue au moyen d'un ventilateur disposé directement sur ce dispositif de soutien. Le dispositif de soutien est mobile selon la verticale et éventuellement dans un plan horizontal.

La plaque munie d'orifices de succion que comporte les dispo sitifs de soutien selon l'art est généralement dans une céramique spécifique. Les plaques céramiques sont assez onéreuses, car il faut prévoir tous les canaux.

Quand on utilise de tels dispositifs de soutien, toute la face de dessus de la feuille de verre vient au contact de la face inférieure de la plaque aspirante. Le toucher de la face du dessus de la feuille de verre est toujours désavantageux si les feuilles de verre sont sensibles à un contact direct. Lorsque la face du dessus est munie d'une surcouche sensible - par exemple d'une couche d'émail imprimé qui se trouve alors à l'état fondu compte tenu de la température du verre -ces dispositifs de soutien ne peuvent être utilisés car la couche d'émail fondu colle à la surface de contact et est alors détruite ou pour le moins endommagée par le contact mécanique.

Il est également connu de procéder au formage d'une feuille de verre conduite par un convoyeur à rouleaux sous une forme supérieure de bombage et soulevée par un courant ascendant d'air chaud qui plaque la feuille de verre contre la forme supérieure de bombage. La feuille de verre est ensuite récupérée par un cadre de trempe qui la transfère entre des caissons de soufflage. Ce procédé est décrit de manière détaillée dans le brevet FR 2 567 508. La forme supérieure de bombage n'a dans ce cas pas besoin d'être percée et est donc moins onéreuse. De plus, le courant d'air chaud agit sur toute la face inférieure du verre, on a donc en quelque sorte un pressage pneumatique qui assure une très bonne qualité de formage. Toutefois, dans ce procédé les dépenses énergétiques sont assez grandes car le courant d'air chaud est établi pendant une longue durée.

L'invention a pour but un procédé de formage dérivé de celui décrit dans le brevet FR 2 567 508, mais d'un moindre coût d'exploitation et permettant de traiter des feuilles de verre partiellement recouvertes sur leur face supérieure par une couche sensible à un contact direct.

Le procédé de bombage selon l'invention est du type où les feuilles de verre sont transportées dans la station de bombage par des rouleaux, soulevées par une différence de pression agissant sur la face de dessous des feuilles de verre et sont pressées contre une forme de bombage disposée au-dessus du convoyeur à rouleaux au moyen d'un courant gazeux chaud dirigé du bas vers les feuilles de verre, comme décrit dans le brevet FR 2 576 508. Le procédé selon l'invention se caractérise par rapport à ce procédé connu par le fait que la différen ce de pression servant à soulever les feuilles de verre au-dessus des rouleaux de transport est obtenue au moyen d'un caisson sous dépression qui entoure la forme de bombage et qui comporte une ouverture sur le dessous correspondant à la forme de la feuille de verre, l'ouverture délimitant une surface de contact annulaire touchant les bords de la feuille de verre et par le fait que la montée du caisson entraîne la montée de la feuille de verre jusqu'à la forme de bombage, le courant gazeux chaud étant établi au moment où la feuille de verre touche la forme de bombage.

Contrairement au procédé connu par le brevet FR 2 567 508, l'envol de la feuille de verre au-dessus des rouleaux de transport et son élévation jusqu'à la forme de bombage ne sont pas dus à la pression dynamique du courant gazeux chaud dirigé vers le haut mais à la seule pression différentielle statique qui agit sur la face de dessous de la feuille de verre en raison de la dépression dans le caisson. Ce n'est qu'après que la feuille de verre ait touché la forme de bombage grâce au caisson sous dépression que le courant de gaz chaud est établi ; ce courant gazeux de gaz chaud sert donc exclusivement au bombage de la feuille de verre. De cette manière, la période pendant laquelle le courant gazeux chaud est établi est plus courte ce qui permet de réduire les dépenses énergétiques et ceci sans perdre l'avantage que procure un bombage par un courant gazeux chaud ascendant.

Le soutien de la feuille de verre est obtenu par un dispositif formé d'un caisson ouvert par le bas dont l'ouverture du dessous correspond à la forme de la feuille de verre à saisir et est légèrement plus petite que celle-ci de manière à ce qu'il se forme sur les bords de la feuille de verre une étroite surface de contact annulaire et à ce que la dépression régnant dans le caisson soit limitée à une valeur telle que le poids de la feuille de verre soit essentiellement compensé. Selon un premier mode de réalisation, le caisson est façonné de manière à ce que ses parois latérales déterminent une section dont la forme correspond à celle du verre et à ce que la face de dessous de ces parois latérales forme la surface de contact annulaire.

Selon un autre mode de réalisation, le caisson comporte une paroi de dessous plane dans laquelle est pratiquée une ouverture d'aspiration. Cette paroi peut-être constituée par une plaque interchangeable ; l'adaptation du dispositif de soutien à une autre forme de feuille de verre peut alors être obtenue par le seul échange de cette plaque.

Dans un développement avantageux de l'invention, la dépression régnant dans le caisson est réglable de façon à obtenir une différence de pression variant en fonction du poids propre de la feuille de verre, et toujours supérieure à celui-ci de sorte que la différence de pression entraîne vers le haut un bombage transversal restreint. De cette manière des bombages indésirés de la feuille de verre dus aux effets de la gravité peuvent être par exemple compensés par un contre bombage imposé.

Le dispositif de soutien selon l'invention peut être utilisé avec d'autres procédés de bombage connus, notamment ceux où la feuille de verre est appliquée contre une forme supérieure de bombage par effet de succion ; dans ce cas également, il permet de dissocier les phases d'envol du verre et de bombage contre la forme supérieure.

Des formes de réalisation préférées de l'invention sont décrites ci-après en référence aux planches annexées.

Les dessins représentent :
- figure 1 : un premier de réalisation du dispositif de soutien selon l'invention,
- figure 2 : un second exemple de réalisation du dispositif de soutien selon l'invention et,
- figure 3 : l'utilisation d'un dispositif de soutien selon l'invention dans un dispositif de bombage dans lequel la feuille de verre est pressée contre une forme de bombage disposée au-dessus du plan de trasport par un courant gazeux chaud dirigé depuis le bas vers la feuille de verre.

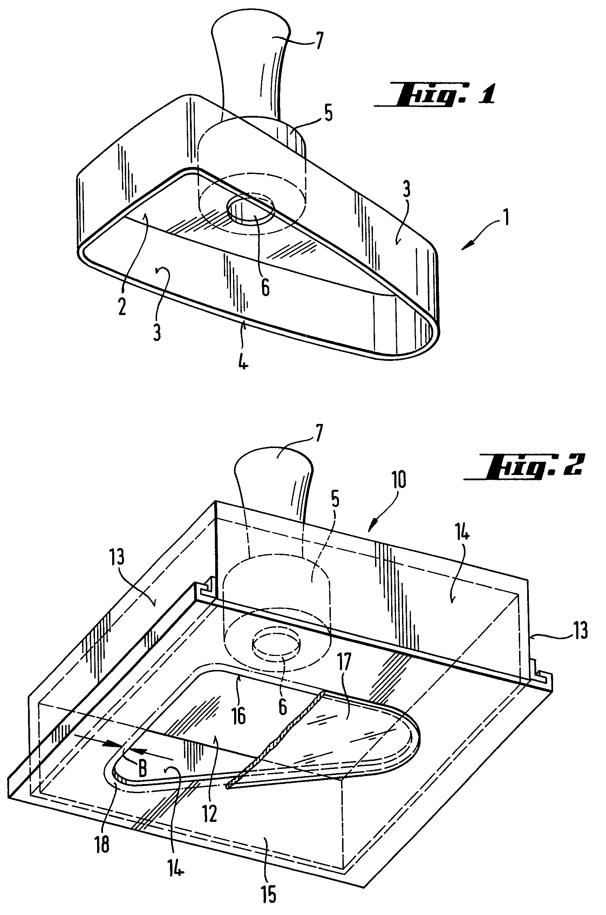

Le dispositif de soutien 1 représenté à la figure 1 est constitué par un caisson par exemple réalisé dans une tôle d'acier réfractaire. Il présente sur le dessus une paroi 2 et sur les côtés une paroi verticale fermée 3. Le caisson est ouvert par le dessous. La face de dessous 4 de la paroi 3 est située dans un plan. La paroi 3 a une forme correspondant à la taille et au pourtour de la feuille à soulever, et ceci de façon à que le contour extérieur de la face de dessous 4 et le contour extérieur de la feuille soulevée soient en congruence. Si l'épaisseur de la paroi 3 atteint par exemple 3 mm, quand la feuille de verre est soulevée, seule une petite portion de sa surface, en l'espèce une bande de 3 mm sur les bords de la feuille, est au contact du dispositif de soutien.

Comme il est usuel pour des dispositifs d'aspiration de cet art, un ventilateur 5 est fixé directement sur le dispositif de soutien. Le ventilateur 5 aspire l'air dans la cavité du caisson par l'ouverture 6 et la canalisation 7. Le ventilateur 5 est ajustable de manière fine et précise et l'effet d'aspiration est dépendant du poids de la feuille de verre à soulever, ce qui signifie que le réglage est effectué en fonction de la taille et de l'épaiseur de la feuille afin que la différence de pression obtenue maintienne la feuille de manière sure contre la face de dessous 4 sans que ne se produise de bombage transversal génant. Selon les cas, un cycle de régulation est prévu pour le réglage du ventilateur 5 en fonction de la dépression régnant dans le caisson fermé par la feuille de verre.

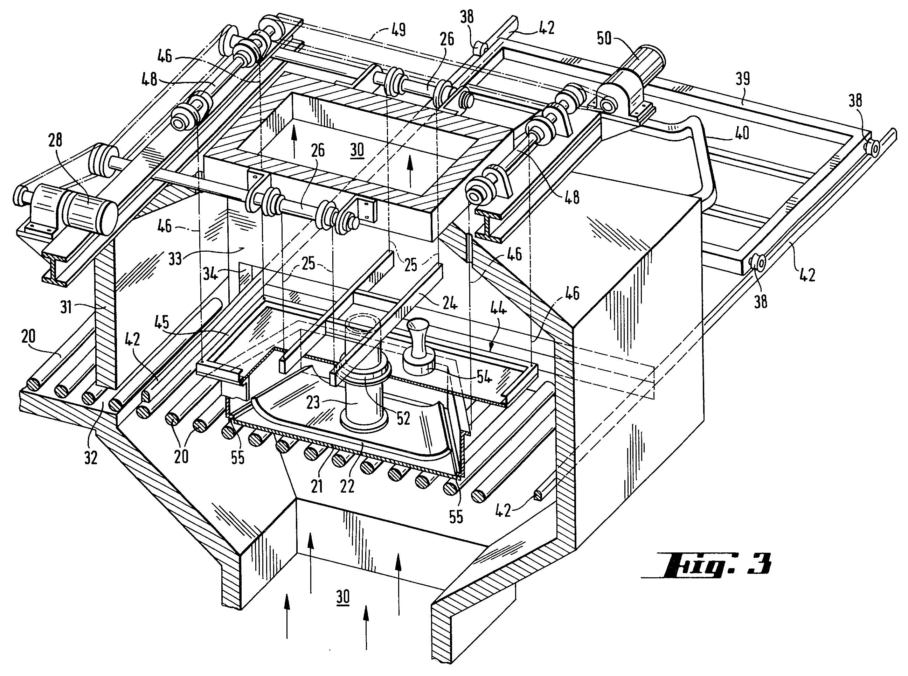

Le dispositif de soutien 1 est mobile de bas en haut, cependant pour simplifier le schéma les équipements correspondants ne sont pas représentés aux figures 1 et 2. Il en est de même des autres équipements nécessaires au bon fonctionnement du dispositif et bien connus de l'homme de l'art. Parmi ceux-ci citons le dispositif de positionnement précis de la feuille de verre en mouvement sur la bande transporteuse et les dispositifs de commande des mouvements de montée-baisse du dispositif 1 et ceux liés au ventilateur 5.

Le dispositif de soutien 1 représenté à la figure 1 ne convient que pour des feuilles de verre d'une forme donnée ; à chaque changement de forme il faut également changer de dispositif de soutien. Par contre, le dispositif de soutien 10 représenté à la figure 2 peut être adapté d'une manière simple à différentes formes de feuilles. Le caisson est constitué dans ce cas d'une plaque de dessus rectangulaire 12 et de parois latérales 13, 14 de même rectangulaires qui délimitent une cavité dont la section dans un plan horizontal est plus grande que la surface de la feuille à saisir. Par le dessous, le caisson est fermé par une plaque plane 15 interchangeable. Dans cette plaque 15 se trouve une ouverture 16 dont le contour correspond au contour de la feuille 17. De cette manière, le contact entre la plaque 15 et la feuille de vere 17 n'a lieu que le long d'une bande étroite 18 dont la largeur B a pour ordre de grandeur de 2 à 5 mm.

La fixation du fond interchangeable 15 sur le caisson est obtenue selon des moyens appropriés en veillant à assurer une bonne étanchéité entre la plaque 15 et les parois 13, 14. Pour adapter le dispositif de soutien à des feuilles de verre d'une autre dimension, il suffit de remplacer la plaque 15 par une autre plaque dont l'ouverture 15 correspond à la nouvelle dimension des feuilles de verre.

Le dispositif de soutien décrit en référence aux figures 1 et 2 est plus particulièrement utile dans tous les cas où une feuille de verre échauffée à la température de bombage doit être soulevée d'un dispositif de transport puis déposée sur un autre support notamment sur une forme de bombage annulaire ou pleine sur laquelle la feuille de verre est bombée sous l'effet de son poids. Dans ces cas, il se substitue aux plaque d'aspiration connues.

Le dispositif de soutien selon l'invention peut également, du fait de sa construction particulière, être utilisé pour d'autres procédés de bombage selon lesquels le formage de la feuille de verre résulte du pressage pneumatique contre une forme de bombage disposée au-dessus de la feuille de verre. Son utilisation avec un tel procédé de bombage est décrit ci-après en référence à la figure 3 qui représente en détails une station de bombage.

La station de bombage comprend un convoyeur horizontal formé de rouleaux de transport 20 au moyen desquels la feuille de verre 21 est transportée au travers d'un four ici non représenté puis de ce four à la station de bombage pour venir se placer sous une forme de bombage pleine 22. La forme de bombage 22 est fixée à un tube 23 lui-même rattaché à un cadre 24. Le cadre 24 est suspendu à des chaînes ou cables 25 qui sont manoeuvrés par des poulies 26 placées à l'extérieur du cater entourant la station de bombage. Les poulies 26 sont commandées par des moteurs 28 grâce auxquels la forme de bombage 22 peut être montée ou abaissée.

La forme de bombage 22 est disposée dans un conduit vertical 30 dans lequel circule de bas en haut un courant d'air chauffé à environ 600° C, avec une pression et un volume donné. La paroi latérale 31 du conduit 30 présente à la hauteur de la chambre de bombage proprement dite une ouverture 32 permettant la pénétration des feuilles de verre 21. La paroi 33 présente une ouverture 34 servant à l'évacuation de la feuille de verre bombée.

Le bombage des feuilles de verre est obtenu grâce au courant gazeux chaud dirigé vers le haut qui presse les feuilles de verre 21 contre la face de la forme de bombage 22 dirigée vers le bas.

Pour transporter les feuilles de verre bombées en dehors de la station de bombage, il est prévu un chariot 39 monté sur des roues 38 sur lequel est placé un anneau de soutien 40 dont la forme et la taille correspondent au pourtour de la feuille de verre. Le chariot 39 roule sur deux rails 42 qui se prolongent jusqu'à l'intérieur de la station de bombage.

La forme de bombage 22 est entourée par un caisson 44 qui peut être déplacé vers le haut ou vers le bas indépendamment de la forme de bombage 22. Dans ce but, le caisson 44 est muni sur sa face supérieure d'un cadre 45 qui est attaché pour sa part à quatre chaînes ou cables 46. Les chaînes ou cables 46 se frayent un passage au travers de la paroi supérieure du carter entourant la station de bombage et sont manoeuvrées à l'extérieur de la chambre de bombage par des poulies 48. Transmise par la courroie 49, la rotation des poulies 48 est commandée par le motor 50 qui de cette manière soulève ou abaisse le caisson 44.

Contre le tube 23 portant la forme de bombage 22, la paroi supérieure du caisson 44 est obturée par un joint 52 autorisant les mouvement relatifs entre le caisson 44 et la forme de bombage 22. Le caisson 44 est muni d'un ventilateur 54 et présente sur sa face inférieure une ouverture qui correspond à la forme de la feuille de verre 21 et est légèrement plus petite que celle-ci de façon à ce que la feuille de verre soit saisie et maintenue le long de son bord extérieur par la surface du bord 55 limitant l'ouverture du caisson 44.

Le cycle de fonctionnement de ce dipositif de bombage est le suivant :

La feuille de verre échauffée à la température de bombage pénètre dans la station de bombage par l'ouverture 32 et est exactement positionnée par un moyen ici non représenté. Pendant ce temps, le caisson 44 se trouve juste au-dessus du plan de transport, de manière à ce que la surface annulaire du bord 55 soit au-dessus de la surface supérieure de la feuille de verre 21. La forme de bombage 22 se trouvant à l'intérieur du caisson prend de même une position telle que la partie la plus basse de la surface de bombage soit située à quelques centimètres au-dessus de la feuille de verre 21.

Dès que la feuille de verre 21 est correctement positionnée, le caisson 44 est abaissé juste au-dessus de la feuille 21 alors que le ventilateur 54 est actionné. Quand la surface 55 du caisson 44 vient au contact de la feuille 21 celle-ci est aspirée et maintenue par la dépression dans le caisson 44. Le caisson 44 et la forme de bombage 22 sont remontés alors simultanément, emmenant avec eux la feuille de verre, les positions relatives de ces divers organes restant inchangés, le chariot 39 et l'anneau de soutien 40 peuvent alors être placés sous la forme de bombage 22. Lorsque la forme de bombage 22 a atteint sa position la plus haute, le caisson 4 poursuit encore quelque peu sa remontée. A ce moment, le courant gazeux chaud est établi. Alors que le caisson 44 continue sa remontée relativement à la forme de bombage 22, la feuille de verre 21 est appuyée contre la surface de bombage de la forme 22 et se détache de la surface 55 du caisson 44. Le poids de la feuille 21 est alors totalement pris en charge par le courant gazeux chaud qui de plus exerce une pression uniforme et bombe la feuille de verre 21 selon la forme correspondant à la forme de bombage 22. Pour aider au processus de bombage et notamment au bombage sur les bords de la feuille de verre, le ventilateur 54 peut être maintenu en action. Eventuellement, l'effet d'aspiration du ventilateur 54 peut même être renforcée à cet instant.

Pendant ou juste après ce processus de bombage, le chariot 39 portant l'anneau 40 est amené sous la forme de bombage 22 qui est alors abaissée juste au-dessus de l'anneau 40. Le courant de gaz chaud est supprimé ou simplement réduit et la feuille de verre 21 retombe sous l'effet de son poids sur l'anneau 40. Elle est alors conduite à la station de traitement suivante et le dispositif est prêt pour un nouveau cycle de bombage.

**Revendications**

1. Procédé de bombage d'une feuille de verre en position horizontale échauffée à la température de bombage selon lequel les feuilles de verre sont transportées dans la station de bombage par des rouleaux de transport, soulevées par une différence de pression agissant sur la face de dessous des feuilles de verre, et sont pressées contre une forme de bombage disposée au-dessus du convoyeur à rouleaux au moyen d'un courant gazeux chaud dirigé du bas vers les feuilles de verre caractérisé en ce que la différence de pression servant à soulever les feuilles de verre au-dessus des rouleaux de transport est obtenue au moyen d'un caisson réglable sous dépression, entourant la forme de bombage avec une ouverture sur le dessous correspondant à la forme de la feuille de verre, l'ouverture délimitant une surgace de contact annulaire touchant les bords de la feuille de verre ; que la feuille de verre est soulevée jusqu'à la forme de bombage par la remontée du caisson et que le courant gazeux chaud est établi au moment où la feuille de verre touche la forme de bombage.

2. Procédé selon la revendication 1 caractérisé en ce que l'effet d'aspiration dans le caisson est maintenu pendant le bombage par le courant gazeux chaud pour renforcer la force de pression conférant le bombage, notamment sur les bords de la feuille de verre.

3. Dispositif pour la mise en oeuvre du procédé selon l'une des revendication 1 ou 2 comportant une bande transporteuse composée de rouleaux horizontaux (20), une forme de bombage (22) disposée au-dessus de la bande transporteuse entourant la station de bombage et un conduit (30) pour un courant gazeux chaud vertical, dirigé vers le haut contre la forme de bombage (22), caractérisé en ce que la forme de bombage est entourée d'un caisson (44) dans lequel peut être établie une dépression, muni d'une ouverture inférieure d'aspiration, ladite ouverture correspondant à la forme de la feuille de verre et étant légèrement plus petite que celle-ci et en ce que le caisson est monté mobile verticalement relativement à la forme de bombage (22).

4. Dispositif de soutien pour une feuille de verre en position horizontale échauffée à la température de formage comportant une enceinte dans laquelle est établie une dépression et une surface de contact munie d'orifices de succion dirigés vers le bas contre laquelle la feuille de verre est maintenue par effet d'aspiration caractérisé en ce qu'il est formé d'un caisson ouvert par le bas dont l'ouverture du dessous correspond à la forme de la feuille de verre à saisir et est légèrement plus petite que celle-ci de manière à ce qu'il se forme sur les bords de la feuille de verre une étroite surface de contact annulaire et à ce que la dépression régnant dans le caisson (1, 10,44) soit limité à une valeur telle qu'elle compense essentiellement le poids de la feuille de verre.

5. Dispositif selon la revendication 4 caractérisé en ce que la paroi latérale (3) du caisson (1) est conformée de manière correspondante au contour de la feuille de verre et en ce que la surface de contact annulaire est formée par la face du dessous (4) de la paroi (3).

6. Dispositif selon la revendication 5, caractérisé en ce que le caisson (10) est muni d'un fond plan sous forme d'une plaque dans lequel est pratiquée une ouverture (16) correspondant à la forme de la feuille de verre de manière à ce que la surface de contact annulaire (18) soit formée par la face de dessous de la plaque (15).

7. Dispositif de soutien selon la revendication 6 caractérisé en ce que la plaque (15) est fixée de façon démontable sur la caisson (10).

8. Dispositif de soutien selon une ou plusieurs des revendications 4 à 7 caractérisé en ce qu'est prévu un circuit de régulation du moteur commandant le ventilateur produisant la dépression dans l'enceinte, pour contrôler la pression choisie.

9. Dispositif de soutien selon une ou plusieurs des revendications 4 à 8 caractérisé en ce que pour produire un contre bombage compensant la déformation due à la gravité, la dépression régnant dans le caisson (1, 10, 44) est réglable et accrue en fonction du poids de la feuille de verre.

0297986

Fig. 1

Fig. 2

Fig. 3